# EUROPÄISCHE PATENTANMELDUNG

(11) **EP 1 656 986 A1**
(43) Veröffentlichungstag der Anmeldung: **17.05.2006**
(21) Anmeldenummer: 05450178.8
(22) Anmeldetag: 25.10.2005
(51) Int. Cl.: B01D 53/94, F01N 3/20

(54) **Harnstoffdosiervorrichtung**

(30) Priorität: 15.11.2004 AT 18992004
(71) Anmelder: Pankl Emission Control Systems GmbH, 8605 Kapfenberg (AT)
(72) Erfinder: Mayer, Hanspeter, 5421 Adnet (AT)
(74) Vertreter: Wildhack, Helmut

(57) **Zusammenfassung**

Die Erfindung betrifft eine Vorrichtung zum Dosieren eines Reduktionsmittels (2), insbesondere einer Lösung wie eine Harnstoff-Wasser-Lösung oder eine AmmoniakLösung, in eine Reaktionszone (4), insbesondere einen Abgastrakt eines Kraftfahrzeuges, umfassend ein Vorratsbehältnis (1) für das Reduktionsmittel (2), ein mit dem Vorratsbehältnis (1) in Verbindung stehendes Fördermittel (5, 6) und ein dem Fördermittel (5, 6) nachgeschaltetes Dosiermittel (9, 10), wobei durch das Fördermittel (5, 6) Reduktionsmittel (2) in Richtung vom Vorratsbehältnis (1) zum Dosiermittel (9, 10) transportierbar ist. Um bei einer derartigen Vorrichtung ein Verstopfen einzelner Komponenten und Druckspitzen an einem Dosiermittel weitgehend zu vermeiden, ist gemäß der Erfindung vorgeschlagen, dass ein Vorratsbehältnis (1) und Fördermittel (5, 6) verbindendes Leitungsmittel (13) vorgesehen ist, über welches dem Dosiermittel (9, 10) überschüssig zugeführtes Reduktionsmittel (2) in das Vorratsbehältnis (1) rückführbar und das Fördermittel (5, 6) belüftbar ist und dass das Fördermittel (5, 6) zum Rücktransport von Reduktionsmittel (2) in Richtung von Dosiermittel (9, 10) zu Vorratsbehältnis (1) ausgelegt ist.

## Beschreibung

Die Erfindung betrifft eine Vorrichtung zum Dosieren eines Reduktionsmittels, insbesondere einer Lösung wie eine Harnstoff-Wasser-Lösung oder eine Ammoniak-Lösung, in eine Reaktionszone, insbesondere einen Abgastrakt eines Kraftfahrzeuges, umfassend ein Vorratsbehältnis für das Reduktionsmittel, ein mit dem Vorratsbehältnis in Verbindung stehendes Fördermittel und ein dem Fördermittel nachgeschaltetes Dosiermittel, wobei durch das Fördermittel Reduktionsmittel in Richtung vom Vorratsbehältnis zum Dosiermittel transportierbar ist.

Ein in den letzten Jahrzehnten stetig gestiegenes und heute hohes Umweltbewusstsein hat im Automobilbereich allgemein zur Forderung einer möglichst effizienten Reinigung von Abgasen von Kraftfahrzeugen geführt. Diese Forderung wird im Grunde mit gesetzgeberischen Maßnahmen, durch welche Schadstoffgrenzwerte für Abgase von Kraftfahrzeugen festgesetzt werden, umgesetzt. Entsprechende Normen, beispielsweise die gegenwärtig gültige und für LKW zu berücksichtigende Abgasnorm EURO-3, bildeten bzw. bilden folglich die Rahmenbedingungen für eine Entwicklung neuer Verfahren und Vorrichtungen zur Abgasreinigung im Kraftfahrzeugbau.

Bei einer Reinigung von Abgasen besteht ein besonderes Interesse auch daran, giftige Stickstoffoxide (NOₓ) aus Abgasen zu entfernen bzw. in unschädliche Gase wie Stickstoff und Wasserdampf umzuwandeln. Eine solche Reinigung kann mit Hilfe eines Katalysators durch eine so genannte SCR-Behandlung (SCR steht für Selective Catalytic Reduction) erfolgen, wobei mittels einer Vorrichtung ein Reduktionsmittel in einen Katalysator-bestückten Abgastrakt eines Kraftfahrzeuges eingebracht wird, um dort die Stickoxide zu ungiftigem Stickstoff zu reduzieren.

Als Reduktionsmittel wird üblicherweise eine Harnstoff-Wasser-Lösung verwendet, aus welcher bei sehr hohen Temperaturen, wie sie im Abgastrakt beim Betrieb eines Kraftfahrzeuges gegeben sind, Ammoniak freigesetzt wird. Der erforderliche Harnstoff wird mittels Dosiervorrichtungen bereitgestellt, wobei eine wässrige Harnstofflösung in einem Vorratsbehältnis gelagert ist, welches bei Lastkraftwagen ein Fassungsvermögen von rund 100 Litern aufweisen kann. Bei Bedarf kann Harnstoff-Wasser-Lösung mittels eines Fördermittels, welches zumindest eine Pumpe und eine oder mehrere Leitungen umfasst, aus dem Vorratsbehältnis entnommen und einem Abgastrakt zugeführt werden. Eine gesteuerte Dosierung in den Abgastrakt kann über ein eigens vorgesehenes Dosiermittel erfolgen, wie es beispielsweise aus den Offenlegungsschriften DE 100 47 512 A1 oder DE 100 47 516 A1 bekannt geworden ist.

Harnstoff-Wasser-Lösungen ermöglichen auf der einen Seite eine wirkungsvolle Umsetzung von giftigen Stickoxiden zu Stickstoff, sind auf der anderen Seite allerdings insofern problematisch, als dass sie schon bei rund - 10°C gefrieren, weshalb im Winter bei der Inbetriebnahme eines Kraftfahrzeuges Leitungen und/oder Pumpen für ein Einbringen einer Hamstofflösung blockiert sein können. Eine Leitungsblockade kann überdies auch bei erhöhten Temperaturen auftreten: Verdunstet Wasser aus Harnstoff-Wasser-Lösungen, so scheiden sich Harnstoffkristalle aus, was in Leitungen einer Verstopfung führen kann. Dies ist insbesondere unmittelbar nach einem Kraftfahrzeugbetrieb relevant, wenn keine Einbringung von Harnstoff-Wasser-Lösung mehr erforderlich ist, einzelne Komponenten einer Dosiervorrichtung aber noch Temperaturen von mehr als 250 °C aufweisen können und sich Harnstoff-Wasser-Lösung in diesen Komponenten befindet. Eine ausgeprägte Tendenz von Harnstoff-Wasser-Lösungen zum Kriechen in Leitungen verstärkt diese Problematik.

Eine weitere Problematik bekannter Dosiervorrichtungen liegt darin, dass aufgrund vom Fördermittel überschüssig geförderter Reduktionsmittelmengen Druckspritzen am Dosiermittel bzw. in damit verbundenen Leitungen auftreten können, was die Gefahr eines Lösens von Leitungen mit sich bringt.

Davon ausgehend stellt sich die Erfindung die Aufgabe, diese Problematiken zu lösen und eine Vorrichtung der eingangs genannten Art anzugeben, bei welcher ein Verstopfen einzelner Komponenten und Druckspitzen an einem Dosiermittel weitgehend vermieden werden können.

Die gestellte Aufgabe wird dadurch gelöst, dass bei einer Vorrichtung der eingangs genannten Art ein Vorratsbehältnis und Fördermittel verbindendes Leitungsmittel vorgesehen ist, über welches dem Dosiermittel überschüssig zugeführtes Reduktionsmittel in das Vorratsbehältnis rückführbar und das Fördermittel belüftbar ist und dass das Fördermittel zum Rücktransport von Reduktionsmittel in Richtung von Dosiermittel zu Vorratsbehältnis ausgelegt ist.

Die mit der Erfindung erzielten Vorteile sind insbesondere darin zu sehen, dass die für einen Transport von Reduktionsmittel von einem Vorratsbehältnis zum Dosiermittel vorgesehenen Komponenten nach dem Gebrauch eines Kraftfahrzeuges zumindest weitgehend von Reduktionsmittel befreit werden können und eine Ressourcensparende Rückführung von in Leitungen/Komponenten befindlichem Reduktionsmittel in das Vorratsbehältnis erfolgen kann. Gleichzeitig kann während des Betriebes eines Kraftfahrzeuges bzw. bei einer Dosierung eine vom Fördermittel überschüssig geförderte Menge an Reduktionsmittel bzw. ein Überstrom über das vorgesehene Leitungsmittel ebenfalls dem Vorratsbehältnis zugeführt werden und in dieser Weise Druckspitzen am Dosiermittel bzw. in der Vorrichtung allgemein vermieden werden.

In einer Variante der Erfindung sind Dosiermittel und Leitungsmittel über eine ein Ventil aufweisende Leitung verbunden und ist das Dosiermittel über diese Leitung belüftbar. Diese Ausgestaltung ermöglicht es, auch das Dosiermittel im Wesentlichen bei Bedarf vollständig von Harnstoff-Wasser-Lösung freizufördern und eine Abscheidung von festem Harnstoff zu vermeiden.

In einer Weiterbildung der Erfindung umfasst das Leitungsmittel ein schaltbares Ventil. Dies ermöglicht eine schnelle und präzise Steuerung des Stoffflusses im Rücklauf bzw. stellt sicher, dass trotz gegebener Ungenauigkeit einer Förderpumpe eine exakte Regulation eines Stoffflusses zum Dosiermittel möglich ist und einem vorgesehenen Dosiermittel gewünschte Stoffmengen zugeführt werden können.

Um eine exakte Dosierung bzw. Freisetzung von Reduktionsmittel als Funktion des NOₓ-Gehaltes des Abgases zu erreichen, ist es von Vorteil, wenn das Dosiermittel ein Ventil und optional eine Düse umfasst. Ventile lassen sich beispielsweise auf elektromagnetischen Wege schnell schalten, so dass auf Schwankungen im NOₓ₋Gehalt des Abgases durch rasche Änderung einer Harnstofflösungszufuhr reagiert werden kann.

Von Vorteil ist es weiter, wenn das Ventil im Wesentlichen aus einem bei Temperaturen von größer als 250 °C beständigen Werkstoff besteht. In diesem Fall kann das Ventil unmittelbar an einem Abgastrakt eines Kraftzeuges befestigt werden und es kann eine Förderung von Reduktionsmittel bis in den Abgastrakt ohne Druckluftunterstützung erfolgen. Überdies erübrigt sich ein Einsatz einer Düse, weil eine direkte Einspritzung über ein Ventil vorgenommen werden kann.

Wenngleich sich grundsätzlich jeder Werkstoff für das Ventil eignet, welcher in Bezug auf die Temperaturbeständigkeit die genannte Bedingung erfüllt, ist es doch vorteilhaft, wenn der Werkstoff eine Stahllegierung ist, da im Bereich eines Abgastraktes auch erhebliche mechanische Beanspruchungen auftreten können.

In einer Variante der Erfindung ist ein Kühlmittelkreislauf zur Kühlung des Ventils durch das Reduktionsmittel vorgesehen. Dies erweist sich insbesondere als günstig, wenn ein Dosiermittel, insbesondere Ventil, unmittelbar an einem Abgastrakt befestigt ist, da durch Kühlen eine thermische Belastung des Dosiermittels verringert werden kann. Gleichzeitig kann vorrätiges Reduktionsmittel zusätzlich funktional genutzt werden.

Die Erfindung ist im Folgenden anhand eines Ausführungsbeispieles noch weitergehend dargestellt.

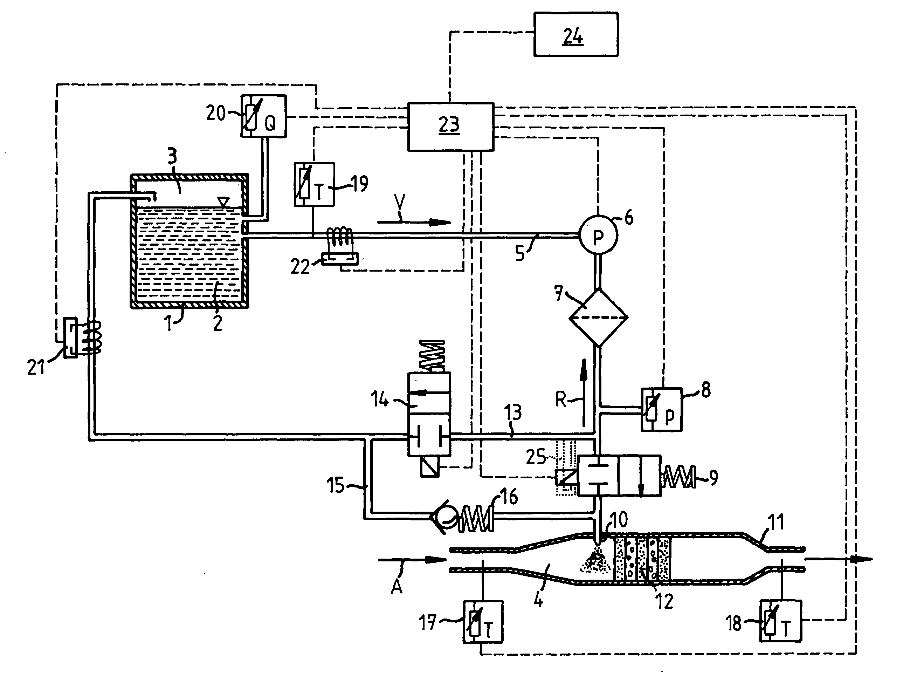

Die einzige Figur zeigt eine blockschaltbildartige Darstellung einer erfindungsgemäßen Vorrichtung, welche in Kombination mit einem katalysatorbestückten Abgastrakt eines Kraftfahrzeuges eine Abgasreinigungsvorrichtung bildet.

Harnstoff-Wasser-Lösung **2** ist in einem Vorratsbehältnis **1** gelagert und wird bei Bedarf mittels Fördermittel in Richtung **V** zu einem Dosiermittel **9, 10** befördert. Das Fördermittel umfasst eine Leitung **5** und eine entlang dieser angeordnete Pumpe **6.** Wie in der Figur dargestellt, kann das Fördermittel weitere Elemente umfassen, beispielsweise einen Filter **7.** Über einen Drucksensor **8** ist ein durch die Pumpe erzeugter Druck messbar. Vom Fördermittel zum Dosiermittel **9, 10** transportierte Harnstoff-Wasser-Lösung **2** wird schließlich über ein elektromagnetisch schaltbares 2/2-Wegeventil **9** und eine Düse **10,** welche zusammen ein Dosiermittel bilden, in eine Reaktionszone **4** eines Abgastraktes **11** eines Kraftfahrzeuges dosiert und dort mit entlang Richtung **A** einströmenden Abgas an einem Katalysator **12** umgesetzt. Temperatursensoren **17, 18** dienen einer Kontrolle von Abgastemperatur am Beginn bzw. Ende des Abgastraktes **11.** In diesen Bereichen können neben diesen Temperatursensoren **17, 18** weitere Sensoren zur Bestimmung von Druck und Abgaszusammensetzung vorgesehen sein, um eine bedarfsgerechte Dosierung von Harnstoff-Wasser-Lösung **2** zu optimieren.

Mit dem Fördermittel bzw. einer Leitung **5** ist eine weitere Leitung **13** verbunden, welche mittels eines vorgesehenen elektromagnetisch schaltbaren 2/2-Wegeventils **14** aktivierbar ist. Wird beim Betrieb eines Kraftfahrzeuges durch eine Pumpe **6** ein Überschuss an Harnstoff-Wasser-Lösung **2** zum Ventil **9** transportiert und wird folglich mit Drucksensor **8** ein unerwünscht hoher Druck gemessen, so genügt es zum Druckabbau, das 2/2-Wegeventils **14** teilweise oder ganz zu öffnen und einen Überstrom in das Vorratsbehältnis **2** rückfließen zu lassen. Selbstverständlich kann auch ein andersartig verursachter Überdruck, beispielsweise durch Harnstoffzersetzung in Leitung **5,** auf diese Weise ausgeglichen werden.

Die in der Figur dargestellte Pumpe **6** ist so ausgelegt, dass sie Harnstoff-Wasser-Lösung **2** nicht nur in Richtung **V,** sondern auch in Richtung **R,** also in Richtung vom Ventil **9** zum Vorratsbehältnis **1,** transportieren kann. Herkömmliche Verdrängerpumpen, Kreiselpumpen oder Flügelzellenpumpen können als Pumpe mit umkehrbarer Förderrichtung zweckmäßig eingesetzt werden; alternativ dazu können Pumpen mit stets gleicher Drehrichtung verwendet werden, wobei durch Schaltung über Ventile Pumpeneinlass und -auslass vertauscht werden (z.B. so genanntes Elektrohyraulisches Abschaltventil mit Strömungsrichtungsumkehr). Dadurch ist es möglich, in Leitung **5** befindliche Lösung in das Vorratsbehältnis **1** rückzufördern und die Leitung **5** vollständig zu entleeren. Eine Belüftung kann dabei über Leitung **13** erfolgen, wenn Ventil **14** offen ist. Das Ventil **9** kann gleichzeitig über eine Leitung **15,** entlang welcher ein Rückschlagventil **16** angeordnet ist, belüftet werden. Günstig kann es sein, um das Ventil **9** einfach und schnell zu entlüften, das Ventil **14** zu schließen, weil dann eine volle Saugleistung am gegenüber einem Querschnitt der Leitung **15** vergleichsweise kleinen freien Querschnitt des Ventils **9** wirkt.

Als Ventil **9** können herkömmliche 2/2-Wegeventile zum Einsatz kommen. Von Vorteil ist es, im Wesentlichen aus einer Stahllegierung bestehende Ventile, beispielsweise aus der Kategorie der Benzindirekteinspritzventile zu verwenden, weil diese hohen Temperaturen und hohen mechanischen Belastungen standhalten. Dies ermöglicht eine Montage des Ventils **9** unmittelbar am Abgastrakt **11.** In einer solchen Variante erübrigt sich ein Einsatz einer Düse und kann eine Einspritzung von Harnstoff-Wasser-Lösung **2** direkt durch ein Ventil erfolgen.

Eine erfindungsgemäße Vorrichtung gemäß der Figur umfasst weiter Heizelemente **21** und **22,** welche zur Beheizung von Fördermittel bzw. Leitungen vorgesehen sind. Überdies ist ein Temperatursensor **19** und ein Füllstandsensor **20** vorgesehen.
Wie in der Figur dargestellt, sind alle steuerbaren Elemente wie Heizelemente, Ventile und Sensoren sind direkt mit einer Steuereinheit **23** elektronisch verbunden. Dies trifft ebenso auf weitere, in der Figur nicht gezeigte Sensoren, insbesondere weitere Sensoren zur Kontrolle bzw. Bestimmung der Zusammensetzung des Abgases am Beginn und am Ende des Abgastraktes **11** bzw. Einlass- und Auslassbereich des Abgastraktes **11,** zu. In der Steuereinheit **23** werden von Sensoren übermittelte Daten verarbeitet; je nach Bedarf bzw. erhaltenen Daten kann das Ventil **9** unmittelbar durch die Steuereinheit **23** geschalten werden.

Das Steuergerät **23** kann ein eigens für eine Abgasreinigungsvorrichtung vorgesehenes Steuergerät darstellen, welches seinerseits mit einem CAN-Bus (Controlled Area Network-Bus) **24** verbunden ist. Bevorzugt ist es allerdings, wenn ein Motorsteuergerät gleichzeitig das Steuergerät **23** darstellt. In diesem Fall kann ein eigenes, ausschließlich für eine Harnstoffzufuhr verwendetes Steuergerät entfallen und können Daten des Motorsteuergerätes zugleich auch zur Einstellung einer optimalen Abgasreinigung verwendet werden, wodurch eine besonders optimierte Reduktionsmittelzufuhr ermöglicht ist.

Wie in der Figur weiter schematisch angedeutet, kann ein Kühlmittelkreislauf **25** zur Kühlung des Ventils **9** vorgesehen sein, wodurch eine thermische Belastung des Ventils **9** beim Kraftfahrzeug-Betrieb gering gehalten werden kann. In dieser Ausgestaltung kann durch Pumpe **6** stetig in Richtung **V** transportiertes Reduktionsmittel nicht nur zur Abgasreinigung, sondern gleichzeitig auch zur Ventilkühlung dienen. Eine Kühlleistung lässt sich dabei einfach durch eine Pumpe **6** und eine Öffnungsstellung des Ventils **14** steuern.

Neben den in der Figur dargestellten Komponenten kann eine erfindungsgemäße Vorrichtung weiter einen oder mehrere Pulsationsdämpfer zwischen Pumpe **6** und Ventil **9** aufweisen. Des Weiteren können zusätzliche Heizungselemente für Komponenten, welche mit Harnstoff-Wasser-Lösung in Kontakt kommen, vorgesehen sein. Um beim Betrieb ein Dosieren von Harnstoff-Wasser-Lösung in Bezug auf die jeweils gegebenen Betriebsbedingungen optimierbar zu machen, kann zusätzlich ein Luftdrucksensor zur Messung des Umgebungsluftdrucks vorgesehen sein. Ebenfalls günstig erweist sich in diesem Zusammenhang ein Einsatz eines NH₃- und/oder NOₓ₋Sensors am Ende des Abgastraktes **11** zur Kontrolle der NOₓ-Umwandlung im Abgas.

Überdies können in einer erfindungsgemäßen Vorrichtung Feststoffpartikelfilter vorgesehen sein, um allenfalls vorhandene Partikel bzw. Kristalle zu filtern und ein Verstopfen von Ventilen zu vermeiden. Zur Bestimmung eines Massenflusses können weiter Coriolis-Sensoren vorgesehen sein.

## Patentansprüche

1. Vorrichtung zum Dosieren eines Reduktionsmittels (2), insbesondere einer Lösung wie eine Harnstoff-Wasser-Lösung oder eine Ammoniak-Lösung, in eine Reaktionszone (4), insbesondere einen Abgastrakt eines Kraftfahrzeuges, umfassend ein Vorratsbehältnis (1) für das Reduktionsmittel (2), ein mit dem Vorratsbehältnis (1) in Verbindung stehendes Fördermittel (5, 6) und ein dem Fördermittel (5, 6) nachgeschaltetes Dosiermittel (9, 10), wobei durch das Fördermittel (5, 6) Reduktionsmittel (2) in Richtung vom Vorratsbehältnis (1) zum Dosiermittel (9, 10) transportierbar ist, **dadurch gekennzeichnet, dass** ein Vorratsbehältnis (1) und Fördermittel (5, 6) verbindendes Leitungsmittel (13) vorgesehen ist, über welches dem Dosiermittel (9, 10) überschüssig zugeführtes Reduktionsmittel (2) in das Vorratsbehältnis (1) rückführbar und das Fördermittel (5, 6) belüftbar ist und dass das Fördermittel (5, 6) zum Rücktransport von Reduktionsmittel (2) in Richtung von Dosiermittel (9, 10) zu Vorratsbehältnis (1) ausgelegt ist.

2. Vorrichtung nach Anspruch 1, **dadurch gekennzeichnet, dass** Dosiermittel (9, 10) und Leitungsmittel (13) über eine ein Ventil (16) aufweisende Leitung (15) verbunden sind und das Dosiermittel (9, 10) über diese Leitung (15) belüftbar ist.

3. Vorrichtung nach Anspruch 1 oder 2, **dadurch gekennzeichnet, dass** das Leitungsmittel (13) ein schaltbares Ventil (14) umfasst.

4. Vorrichtung nach einem der Ansprüche 1 bis 3, **dadurch gekennzeichnet, dass** das Dosiermittel (9, 10) ein Ventil (9) und optional eine Düse (10) umfasst.

5. Vorrichtung nach Anspruch 4, **dadurch gekennzeichnet, dass** das Ventil (9) im Wesentlichen aus einem bei Temperaturen von größer als 250 °C beständigen Werkstoff besteht.

6. Vorrichtung nach Anspruch 5, **dadurch gekennzeichnet, dass** der Werkstoff eine Stahllegierung ist.

7. Vorrichtung nach Anspruch 4, **dadurch gekennzeichnet, dass** ein Kühlmittelkreislauf (25) zur Kühlung des Ventils (9) durch das Reduktionsmittel (2) vorgesehen ist.
